# EUROPEAN PATENT SPECIFICATION

(11) **EP 0 650 096 B1**
(45) Date of publication and mention of the grant of the patent: **02.01.2004**
(21) Application number: 94115887.5
(22) Date of filing: 07.10.1994
(51) Int. Cl.: G03G 7/00, C08G 64/10

(54) **Transfer sheet of polycarbonate-based resin**
Übertragungsfolie aus Polykarbonatharz
Feuille de transfert à base d'une résine polycarbonate

(30) Priority: 12.10.1993 JP 27910193; 25.03.1994 JP 7995894
(43) Date of publication of application: 26.04.1995
(73) Proprietor: KUREHA KAGAKU KOGYO KABUSHIKI KAISHA, Chuo-ku, Tokyo 103-8552 (JP)
(72) Inventor: Teramoto, Yoshikichi, Inashiki-gun, Ibaraki-ken (JP); Misawa, Tooru, Iwaki-shi, Fukushima-ken (JP); Matsunaga, Satoru, Ishioka-shi, Ibaraki-ken (JP)
(74) Representative: Hansen, Bernd, Dr. Dipl.-Chem.

(56) References cited:
- EP-A- 0 302 447
- EP-A- 0 359 366
- EP-A- 0 424 800
- EP-A- 0 506 109
- DE-A- 3 202 477
- US-A- 4 352 847

## Description

### BACKGROUND OF THE INVENTION:

The present invention relates to a transfer sheet comprising a polycarbonate-based resin for printing media of electrophotographic copying machines or printers.

The transfer sheet has the function of transferring the image formed on a photosensitive drum and as occasion demands, the functions of transferring and releasing a copying paper, and usually has a drum- or belt-like shape. This transfer sheet is required to meet various and high-level property requirements such as excellent electrical and mechanical properties and high flame retardancy. Regarding the electrical properties of the transfer sheet, the charging and discharging characteristics are of much account for attaching of the copying paper on the transfer sheet, smooth carriage of the copying paper and transfer of the toner.

In use with certain kinds of copying machine, the transfer sheet is required to have excellent creep properties and fatigue fracture resistance, since the transfer sheet is mechanically deformed when releasing the copying paper. In use with another type of copying machine, the transfer sheet is required to have durability against repetitive bending since the transfer sheet is turned in a belt-like state when passed between the rolls. Such mechanical durability needs to be high enough to stand several tens of thousand times of copying.

The transfer sheet must be replaced with new one when the copy image quality has dropped due to fatigue deformation of the sheet. It is preferable that the transfer sheet be transparent because when the sheet is changed, the new one can be readily set at the accurate position and the workability is bettered. Thus, the transfer sheet is required to have a parallel ray transmittance of not less than 60%, preferably not less than 80%. Also, since the transfer sheet is a part of an electromechanical part, its flame retardancy is made much account of and the transfer sheet is required to meet the requirements of not less than V-2 level of UL (Underwriters Laboratories Inc.) Standards No. 94.

Further, there is a conflict that when it is tried to satisfy one property requirements, it is found difficult to meet other requirements. For example, when it is attempted to satisfy the requirement for flame retardancy, it is become to deteriorate the mechanical durability (fatigue strength) and the transparency. Also, when reducing a sheet thickness, the transparency becomes favorable, but the flame retardancy becomes deteriorated.

Japanese Patent Publication No. 56-25953 suggests that compositions comprising brominated polycarbonate oligomers and high-molecular weight halogenated aromatic polycarbonates are flame-retardant. Also, Japanese Patent Publication No. 55-4338 describes that the content of a brominated polycarbonate oligomer necessary for making a polycarbonate flame-retardant so as to satisfy V-1 level of UL Standards No. 94 is not less than 3% by mass.

These related arts, however, merely disclose techniques for improving flame retardancy. No suggestion nor motivation is made of applicability of the disclosed compositions to the transfer sheets, and there is no description concerning compositions of meeting the required levels of mechanical durability, transparency and flame retardancy at the same time.

Also, since brominated polycarbonate sheets are lower in fatigue strength and more liable to stress cracking than non-brominated polycarbonate sheets, mere disclosure concerning the resin compositions comprising brominated polycarbonates and brominated polycarbonate oligomers, gives no substantial hint at realizing a transfer sheet having an excellent mechanical durability (fatigue strength), a high transparency and an excellent flame retardancy.

EP-A-0 506 109 relates to a transfer material carrying member comprising a copolymer and conductive particles, for instance carbon black, metal particles, metal oxide particles and conductive resin particles. The copolymer is of polycarbonate type.

EP-A-0 359 366 discloses a medical molding suitable for contacting with blood or physiological solution, comprising a γ-ray resistant material comprising an aromatic polycarbonate resin, which γ-ray resistant material contains from 0.1 to 10 % by weight of halogen atoms.

DE-A-32 02 477 relates to a polycarbonate composition containing as main components (A) 100 wt.% of a polycarbonate resin, (B) 0.3 to 10 wt.% of a polyethylene resin, (C) 0.3 to 10 wt.% of an elastomeric acrylic graft copolymer and (D) 0.3 to 10 wt.% of an isobutylene copolymer rubber. This document teaches to apply the corresponding polycarbonate composition in the automobile industry.

There is a strong demand to provide a transfer sheet having excellent mechanical durability, transparency and flame retardancy, more specifically, a high fatigue fracture resistance that enables transfer of tens of thousand times of printing media, a high transparency that allows easy exchange of transfer sheet, and a flame retardancy of the not less than V-2 level of UL Standards No. 94.

As a result of the present inventors' intensive studies for satisfying the above request, it has been found that by extrusion-molding resins comprising not less than 75% by mass of a polycarbonate-based resin, the obtained sheet having characteristics that the ratio of infrared absorbance at the wave number of 155 mm⁻¹ to that at 160 mm⁻¹ is 0.3 to 0.6, that the melt viscosity at the shear rate of 200/sec at 280°C is not less than 2,000 Pa·s and that the thickness is 130 to 250 µm, possesses not less than 4 x 10⁴ times of roll pass in the mechanical durability test described below, shows a parallel ray transmittance of not less than 60%, can meet the flame retardancy requirements of not less than V-2 level of UL Standards No. 94, and such sheet is useful as a transfer sheet. The present invention has been attained on the basis of this finding.

### SUMMARY OF THE INVENTION:

It is an object of the present invention to provide a transfer material for electrophotography which can withstand deformation taking place when releasing the copying paper, has a fatigue fracture resistance that may take tens of thousand times of copies, has a high degree of transparency that allows easy change of transfer material when the copy image quality has lowered due to fatigue deformation, and can clear the flame retardancy standards of not less than V-2 level of UL Standards No. 94.

To achieve the aims, according to the present invention, there is provided a transfer sheet as defined in the claims having characteristics that the ratio of infrared absorbance at the wave number of 155 mm⁻¹ to that at 160 mm⁻¹ is 0.3 to 0.6, the melt viscosity at the shear rate of 200/sec at 280°C is not less than 2,000 Pa·s and the sheet thickness is 130 to 250 µm.

### DETAILED DESCRIPTION OF THE INVENTION:

The transfer sheet for electrophotography according to the present invention consists of:
- (i): a polycarbonate-based resin, which may be brominated, in an amount of not less than 75% by mass to less than 100% by mass,
- (ii): a brominated polycarbonate oligomer having recurring structural units of the following formula (I) , said oligomer being present in an amount of not more than 25% by mass to more than 0% by mass : 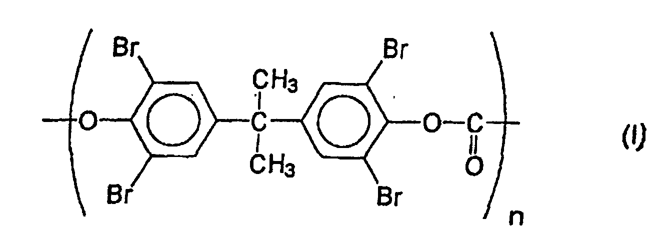 wherein n = 2-30;
- (iii): optionally a graft copolymer which may be brominated and comprises a rubber backbone polymer and a branched polymer comprising at least one of acrylic alkyl esters and methacrylic alkyl esters as a structural unit, said graft copolymer being present in an amount of less than 25% by mass;
, wherein the ratio of infrared absorbency at the wave number of 155 mm⁻¹ to that of 160 mm⁻¹ of said sheet is 0,3 to 0,6; the melt viscosity at the shear rate of 200/sec at 280°C of said sheet is not less than 2,000 Pa.s; and the thickness of said sheet is 130 to 250 µm.

The transfer sheet of the present invention has a characteristic that the ratio of infrared absorbance at the wave number of 155 mm⁻¹ to that at 160 mm⁻¹ is 0.3 to 0.6, preferably 0.35 to 0.55. The ratio of infrared absorbance at the wave number of 155 mm⁻¹ to that at 160 mm⁻¹ is hereinafter referred to simply as "absorbance ratio". When this absorbance ratio is less than 0.3, the transfer sheet is unsatisfactory in flame retardancy, and when the absorbance ratio exceeds 0.6, the mechanical durability of the transfer sheet deteriorates. This absorbance ratio is an index of the content of bromine atoms in the sheet.

The absorbance ratio was determined in the following method. A pelletized or sheet-like polycarbonate-based resin was press-molded at 260°C to form an approximately 80 µm thick sheet, and an infrared spectrophotometer FTIR-1710 (manufactured by Perkin-Elmer Co., Ltd.), the absorptions at the wave numbers of 155 mm⁻¹ and 160 mm⁻¹ on the spectrum were measured according to the transmission method and the absorbances (D) at the said wavelengths were determined by the ordinary method, and therefrom the absorbance ratio (D at 155 mm⁻¹/D at 160 mm⁻¹) was determined.

The transfer sheet according to the present invention has further characteristic that the melt viscosity at the shear rate of 200/sec at 280°C is not less than 2,000 Pa·s. Where the term "melt viscosity" is used in the present invention, it means melt viscosity at the shear rate of 200/sec at 280°C. When the melt viscosity is below 2,000 Pa·s, the transfer sheet lacks required mechanical durability. The melt viscosity shown in the present invention are those determined by using Capillograph (manufactured by Toyo Seiki Co., Ltd.). The upper limit of the melt viscosity of the transfer sheet is not specifically defined as far as the transfer sheet is moldable, but when the melt viscosity exceeds 4,000 Pa·s, the moldability of the transfer sheet tends to deteriorate, making it difficult to carry out extrusion molding. Preferably the melt viscosity of the transfer sheet is below 3,500 Pa·s. Thus, a transfer sheet whose melt viscosity at the shear rate of 200/sec at 280°C is not less than 2,000 Pa·s, preferably 2,100 to 4,000 Pa·s, more preferably 2,200 to 3,500 Pa·s.

The transfer sheet of the present invention comprises a composition containing not less than 75% by mass of a polycarbonate-based resin. For providing the above-specified range of absorbance ratio, the polycarbonate-based resin itself may be brominated one, the other component material(s) constituting the sheet may be brominated, or both the polycarbonate-based resin and the other component material(s) may be brominated.

As the polycarbonate-based resin, for example, a resin which is obtained by the phosgene method and is capable of the extrusion method, may be cited.

The bromine atom in the brominated polycarbonate-based resin preferably exists in the form of tetra-bromobisphenol A. That is to say, the preferred brominated polycarbonate-based resin is a copolymer having the recurring structural units represented by the following formula (I): 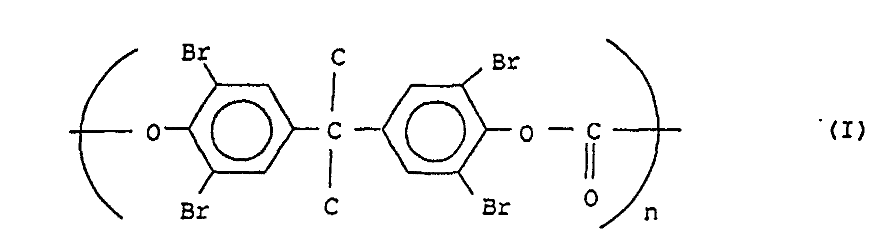 The number of structural units, n, is not particularly limited.

Such brominated polycarbonates are commercially available, the typical examples thereof, being Novarex 7030NB (produced by Mitsubishi Kasei Corp.) , and Panlite KN-1300 (produced by Teijin Kasei Corp).

In the present invention, a brominated polycarbonate oligomer is added to the polycarbonate-based resin. The brominated polycarbonate oligomers in the present invention are preferably usable those having a melt viscosity at the shear rate of 200/sec at 280°C is 50 to 1,000 Pa·s, more preferably 60 to 600 Pa·s.

The brominated polycarbonate oligomer used in the present invention is preferably of a single structural oligomer having the structural units represented by the formula (I) or a copolymeric oligomer having the structural units represented by the formula (I): 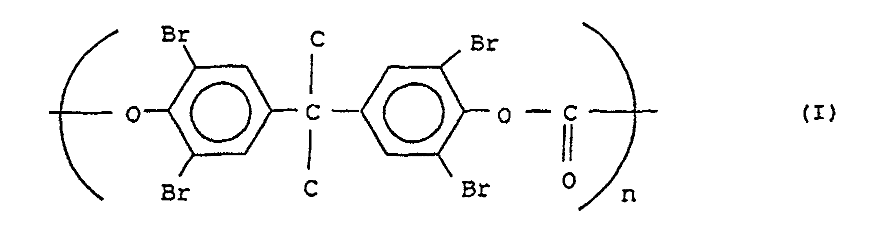 The "oligomers" referred to in the present invention means oligomers composed of 2 to 30 of structural units.

As the structural units other than those of the formula (I), which are usable for the copolymeric oligomers in the present invention, structural units constituting the polycarbonates or copolycarbonates can be cited.

Such brominated polycarbonate oligomers are commercially available, as for example Fireguard 7000 and Fireguard 7500 (produced by Teijin Kasei Corp.) and BC-52 (produced by Great Lakes Chemical Co., Ltd).

In the transfer sheet of the present invention, the content of the polycarbonate-based resin is not less than 75% by mass, preferably not less than 90% by mass, and the content of the brominated polycarbonate oligomer is not more than 25% by mass, preferably not more than 10% by mass.

In the present invention, it is possible that the transfer sheet contains less than 25% by mass of a graft copolymer comprising a rubber backbone polymer and a branched polymer comprising at least one of acrylic alkyl esters and methacrylic alkyl esters as a structural unit.

The process for producing the sheet of the present invention is not specified; the sheet can be produced according to a conventional process which comprises premixing (if necessary) the starting materials and subjecting the resultant mixture to melt-kneading and molding. For instance, the pelletized materials are melt-kneaded and then extrusion-molded into a sheet by an extrusion molding machine. For extrusion molding, there can be used, for example, a uniaxial-screw extruder provided with a T-die. The molding temperature is usually around 270 to 300°C.

The thickness of the transfer sheet according to the present invention is 130 to 250 µm, preferably 135 to 200 µm, more preferably 140 to 170 µm. When the thickness is less than 130 µm, the transfer sheet proves unsatisfactory in flame retardancy, and when the thickness is more than 250 µm, the transfer sheet rigidity becomes too high, making it hard to bend the transfer sheet when attached to a machine or in other use.

The transfer sheet of the present invention has characteristics that the number of times in which the sheet can pass the roll without break in the mechanical durability test described below is not less than 4 x 10⁴, preferably not less than 5 x 10⁴; the flame retardancy of the sheet is such that it can meet the requirements of not less than V-2 level of UL Standards No. 94; and the parallel ray transmittance is not less than 60%, preferably not less than 80%.

### Mechanical durability test

Each test sheet was cut into a strip of 10 mm in width and 110 mm in length. This strip-shaped sheet, with a load of 29.4 N applied to both ends in the longitudinal direction thereof, was reciprocated on a freely rotatable roll and the number of times that the sheet could pass the roll without break (equivalent to twice the number of reciprocation) was counted. The sheet amplitude was 25 mm and each sheet specimen was reciprocated at a rate of 140 times/min (corresponding to the average speed of 7 m/min).

The transfer sheet of the present invention has a fatigue fracture resistance that allows tens of thousands of times of transfer of a printing medium, a transparency that can facilitate exchange of transfer sheet and a flame retardancy that meets the requirements of not less than V-2 level of UL Standards No. 94, and thus can ideally serve as a transfer material for the printing media in electrophotography or printing.

### EXAMPLES:

Evaluation of compositions in Examples and Comparative Examples was carried out the following manner.

### Mechanical durability

Each test sheet was cut into a strip of 10 mm in width and 110 mm in length. This strip-shaped sheet, with a load of 29.4 N applied to both ends in the longitudinal direction thereof, was reciprocated on a freely rotatable roll and the number of times that the sheet could pass the roll without break (equivalent to twice the number of reciprocation) was counted. The sheet amplitude was 25 mm and each sheet specimen was reciprocated at a rate of 140 times/min (corresponding to the average speed of 7 m/min). The indicated value for each sheet is the average of the measurements on five specimens. This evaluation method is an accelerated test of fatigue fracture of transfer sheets commonly used in the art.

### Break strength

Measured according to ASTM D-882 in the machine direction.

### Tear strength

Measured according to JIS K-7128-B.

### Flame retardancy

Measured according to UL 94-V.

### Transparency

Parallel ray transmittance was measured according to JIS K-7105.

### Example 1

87% by mass of a brominated polycarbonate resin partly having the structural units of the formula (I) (Panlite KN-1300 produced by Teijin Kasei Corp.; melt viscosity: 3,010 Pa·s; absorbance ratio: 0.07) and 13% by mass of a brominated polycarbonate oligomer of the formula (I) (Fireguard FG7000 produced by Teijin Kasei Corp.: melt viscosity: 260 Pa·s) were blended and pelletized by a twinscrew extruder. The obtained pellets were dried at 120°C for 6 hours and then molded into a 150 µm-thick sheet by using a uniaxial screw extruder provided with a T-die. The absorbance ratio of the obtained sheet was 0.31. The absorbance ratio mentioned here and hereinafter was measured in the afore-described manner for a 80 µm thick sheet.

This sheet was cut to a size of 400 mm in width and 630 mm in length and then shaped into a drum-like form to obtain a transfer sheet, and its electrostatic properties were evaluated. When a DC voltage of +3.5 kV was applied to the sheet by using brush-like electrodes, the surface potential of the sheet produced was 1,800 V and the sheet could easily draw paper to itself. Then, when the sheet was destaticized by applying -700 V, its surface potential dropped to 0 V and paper could be easily separated. The properties of the sheet are shown in Table 1.

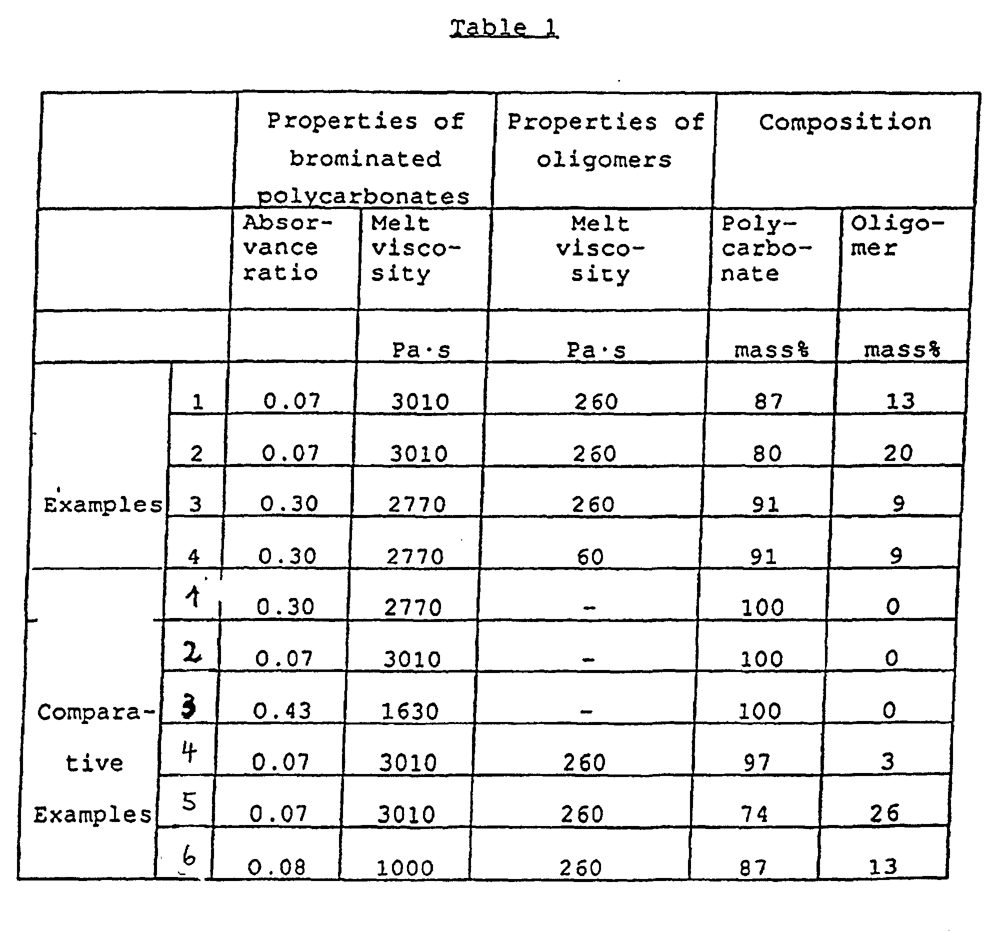

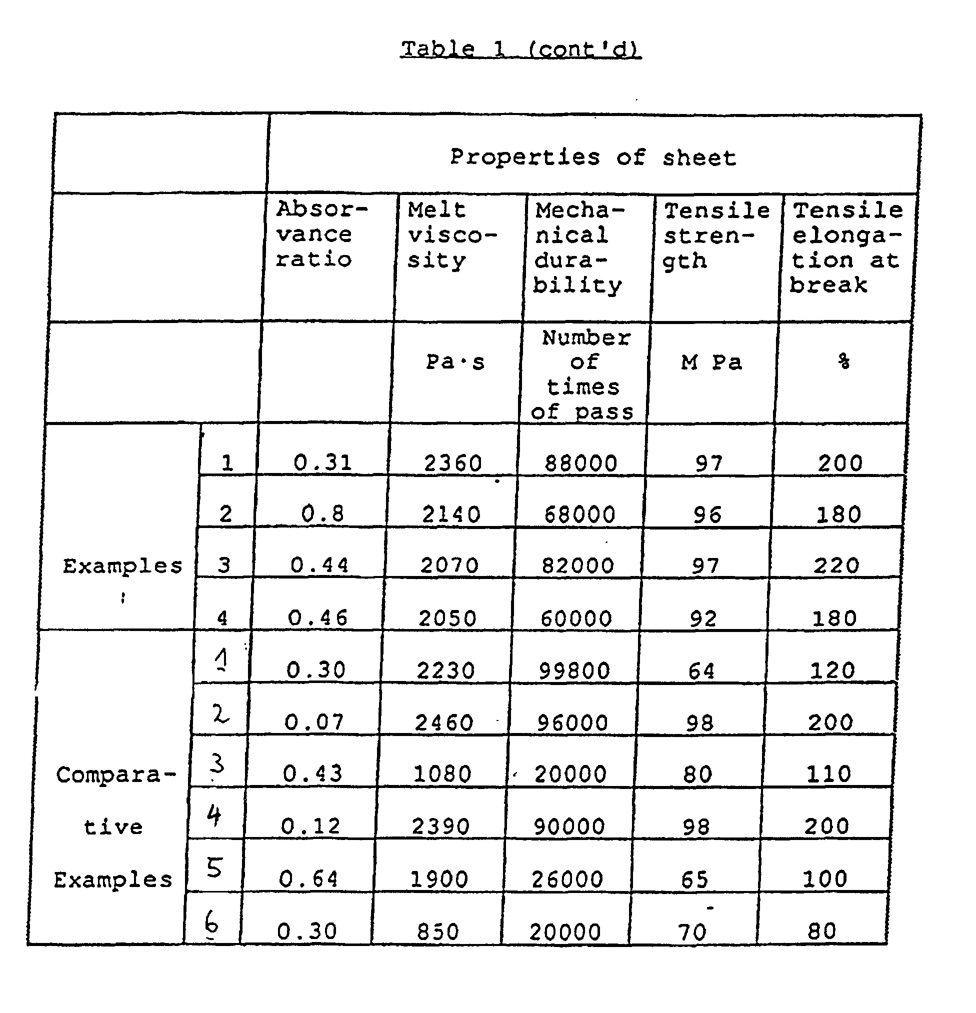

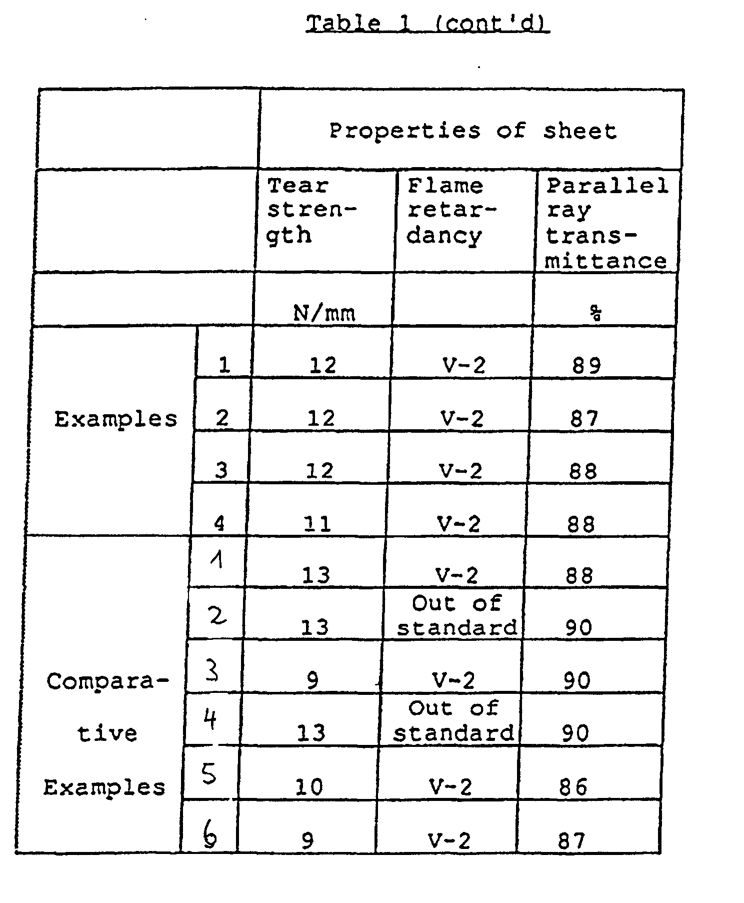

### Example 2

The same procedure as Example 1 was carried out except that the amount of the brominated polycarbonate resin was reduced to 80% by mass while correspondingly increasing the amount of the brominated polycarbonate oligomer. The absorbance ratio of the obtained sheet was 0.48. The properties and the test results of this sheet are shown in Table 1.

### Example 3

The same procedure as Example 1 was carried out except that 91% by mass of Novarex 7030NB (a brominated polycarbonate resin partly having the structural units of the formula (I), produced by Mitsubishi Kasei Corp.; the melt viscosity: 2,770 Pa·s; the absorbance ratio: 0.30) was used in place of 87% by mass of Panlite KN-1300, with the corresponding change to 9% by mass of Fireguard FG7000. The absorbance ratio of the obtained sheet was 0.44. The properties and the test results of this sheet are shown in Table 1.

### Example 4

The same procedure as Example 3 was carried out except for use of BC 52 (a brominated polycarbonate oligomer of the formula (I), produced by Great Lakes Chemical Co.) in place of Fireguard FG7000. The absorbance ratio of the obtained sheet was 0.46. The properties and the test results of the sheet are shown in Table 1.

### Comparative Example 1

The same procedure as Example 3 was carried out except that Novarex 7030NB alone was used as starting material. The results are shown in Table 1.

### Comparative Example 2

The same procedure as Example 1 was carried out except that no brominated polycarbonate oligomer was used. The absorbance ratio of the obtained sheet was 0.07. The results are shown in Table 1.

### Comparative Example 3

The same procedure as Example 1 was carried out except that Toughlon NB 2500 of Idemitsu Petrochemical Corp.; the melt viscosity: 1,630 Pa·s; the absorbance ratio: 0.43) was used as brominated polycarbonate resin, and that no brominated polycarbonate oligomer was used. The absorbance ratio of the obtained sheet was 0.43. The results are shown in Table 1.

### Comparative Examples 4 and 5

The same procedure as Example 1 was carried except that the amount of the brominated polycarbonate resin was changed to 97% by mass and 74% by mass, respectively, while correspondingly changing the amount of the brominated polycarbonate oligomer. The absorbance ratios of the obtained sheets were 0.12 and 0.64, respectively. The results are shown in Table 1.

### Comparative Example 6

The same procedure as Example 1 was followed except that Panlite LN-1250 (a brominated polycarbonate resin produced by Teijin Kasei Corp.; the melt viscosity: 1,000 Pa·s; the absorbance ratio: 0.08) was used in place of Panlite KN-1300. The absorbance ratio of the obtained sheet was 0.30. The results are shown in Table 1.

## Claims

1. Transfer sheet for electrophotography consisting of:
(i) a polycarbonate-based resin which may be brominated, in an amount of not less than 75% by mass to less than 100 % by mass; and
(ii) a brominated polycarbonate oligomer having recurring structural units of the following formula (I), said oligomer being present in an amount of not more than 25% by mass to more than 0% by mass: 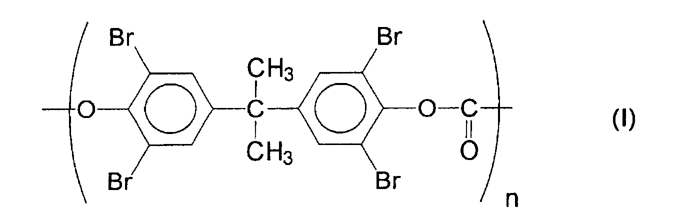 wherein n = 2-30;
(iii) and optionally a graft copolymer which may be brominated and comprises a rubber backbone polymer and a branched polymer comprising at least one of acrylic alkyl esters and methacrylic alkyl esters as a structural unit, said graft copolymer being present in an amount of less than 25% by mass;
wherein the ratio of infrared absorbency at the wave number of 155 mm⁻¹ to that of 160 mm⁻¹ of said sheet is 0,3 to 0,6; the melt viscosity at the shear rate of 200/sec at 280°C of said sheet is not less than 2,000 Pa.s; and the thickness of said sheet is 130 to 250 µm.

2. Transfer sheet according to claim 1, wherein the melt viscosity at the sheer rate of 200/sec at 280°C of said sheet is 2,100 to 4,000 Pa.s.

3. Transfer sheet according to claim 2, wherein the melt viscosity at the shear rate of 200/sec at 280°C of said sheet is 2,200 to 3,500 Pa.s.

4. Transfer sheet according to claim 1, wherein the melt viscosity at the shear rate of 200/sec at 280°C of said brominated polycarbonate oligomer is 50 to 1,000 Pa.s.

5. Transfer sheet according to claim 4, wherein the melt viscosity at the shear rate of 200/sec at 280°C of said brominated polycarbonate oligomer is 60 to 600 Pa.s.

6. Transfer sheet according to anyone of the preceding claims, wherein the thickness is 135 to 200 µm.

7. Transfer sheet according claim 6, wherein the thickness is 140 to 170 µm.

8. Transfer sheet according to anyone of the preceding claims, which has characteristics that the number of times the sheet can pass the roll without break in the mechanical durability test described in the description is not less than 4 x 10⁴, that the flame retardancy of the sheet is such that it can meet the requirements of not less than V-2 level in UL Standards No. 94, and that the parallel ray transmittance of the sheet is not less than 60%.

9. Use of a transfer sheet as defined in anyone of the preceding claims in electrophotographic copying machines or printers.

## Patentansprüche

1. Transfersheet für die Elektrofotografie, bestehend aus:
(i) einem Harz auf Polycarbonatbasis, das bromiert sein kann, in einer Menge von nicht weniger als 75 Gew.% bis weniger als 100 Gew.%; und
(ii) einem bromierten Polycarbonatoligomer, das sich wiederholende Struktureinheiten der folgenden Formel (I) aufweist, wobei dieses Oligomer in einer Menge von nicht mehr als 25 Gew.% bis mehr als 0 Gew.% vorliegt: 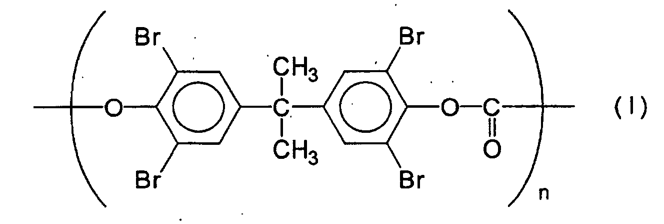 worin n = 2 bis 30;
(iii) und gegebenenfalls einem Pfropfcopolymer, das bromiert sein kann und ein Kautschukgerüstpolymer und ein verzweigtes Polymer umfasst, das mindestens eine Einheit unter Acrylalkylestern und Methacrylalkylestern als Struktureinheit aufweist, wobei dieses Pfropfcopolymer in einer Menge von weniger als 25 Gew.% vorliegt;
worin das Verhältnis des Infrarotabsorptionsvermögens des Sheets bei einer Wellenzahl von 155 mm⁻¹ zu dem bei 160 mm⁻¹ 0,3 bis 0,6 beträgt; die Schmelzviskosität des Sheets bei einer Scherrate von 200/sek bei 280°C nicht weniger als 2.000 Pa·s beträgt; und die Dicke des Sheets 130 bis 250 µm ist.

2. Transfersheet gemäss Anspruch 1, worin die Schmelzviskosität des Sheets bei einer Scherrate von 200/sek bei 280°C 2.100 bis 4.000 Pa·s beträgt.

3. Transfersheet gemäss Anspruch 2, worin die Schmelzviskosität des Sheets bei einer Scherrate von 200/sek bei 280°C 2.200 bis 3.500 Pa·s beträgt.

4. Transfersheet gemäss Anspruch 1, worin die Schmelzviskosität des bromierten Polycarbonatoligomers bei einer Scherrate von 200/sek bei 280°C 50 bis 1.000 Pa·s beträgt.

5. Transfersheet gemäss Anspruch 4, worin die Schmelzviskosität des bromierten Polycarbonatoligomers bei einer Scherrate von 200/sek bei 280°C 60 bis 600 Pa·s beträgt.

6. Transfersheet gemäss einem der vorangehenden Ansprüche, worin die Dicke 135 bis 200 µm beträgt.

7. Transfersheet gemäss Anspruch 6, worin die Dicke 140 bis 170 µm beträgt.

8. Transfersheet gemäss einem der vorangehenden Ansprüche, welches die Eigenschaften aufweist, dass das Sheet die Walze ohne Bruch in dem in der Beschreibung beschriebenen mechanischen Haltbarkeitstest nicht weniger als 4 × 10⁴ mal passieren kann, dass die Flammverzögerung des Sheets derart ist, dass sie die Anforderungen von nicht weniger als dem V-2-Level in den UL-Normen mit der Nr. 94 erfüllen kann, und dass der Parallelstrahlendurchlassgrad des Sheets nicht weniger als 60 % beträgt.

9. Verwendung eines Transfersheets, wie es in einem der vorangegangenen Ansprüche definiert ist, in elektrofotografischen Kopiermaschinen oder Druckern.

## Revendications

1. Feuille de transfert pour électrophotographie comprenant :
(i) une résine à base de polycarbonate qui peut être bromée dans une quantité d'au moins 75 % en poids à moins de 100 % en poids ; et
(ii) un oligomère de polycarbonate bromé ayant des unités structurales récurrentes de formule suivante (I), ledit oligomère est présent dans une quantité ne dépassant pas 25 % en poids et supérieure à 0 % en poids : 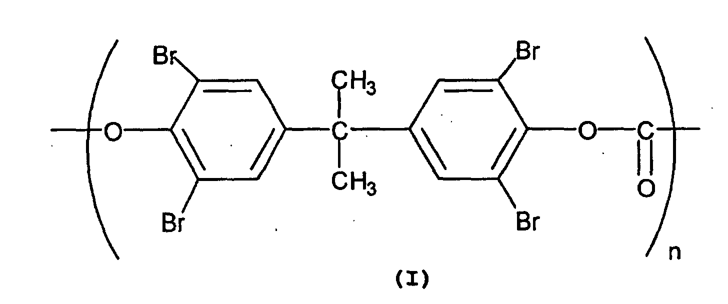 où n = 2 - 30,
(iii) et, éventuellement, un copolymère greffé qui peut être bromé et qui comprend un polymère à squelette caoutchouc et un polymère ramifié comprenant au moins l'un des esters d'alkyle acrylique et esters d'alkyle méthacrylique comme unité structurale, ledit copolymère greffé est présent dans une quantité inférieure à 25 % en poids ;
dans laquelle le rapport d'absorbance infrarouge à un nombre d'ondes de 155 mm⁻¹ et à un nombre d'ondes de 160 mm⁻¹ de ladite feuille est de 0,3 à 0,6 ; la viscosité à l'état fondu à une vitesse de cisaillement de 200/seconde à 280°C de ladite feuille est d'au moins 2000 Pa.s, et l'épaisseur de ladite feuille est de 130 à 250 µm.

2. Feuille de transfert, selon la revendication 1, dans laquelle la viscosité à l'état fondu à une vitesse de cisaillement de 200/seconde à 280°C de ladite feuille est de 2100 à 4000 Pa.s.

3. Feuille de transfert, selon la revendication 2, dans laquelle la viscosité à l'état fondu à une vitesse de cisaillement de 200/seconde à 280°C de ladite feuille est de 2200 à 3500 Pa.s.

4. Feuille de transfert, selon la revendication 1, dans laquelle la viscosité à l'état fondu à une vitesse de cisaillement de 200/seconde à 280°C dudit oligomère de polycarbonate bromé est de 50 à 1000 Pa.s.

5. Feuille de transfert, selon la revendication 4, dans laquelle la viscosité à l'état fondu à une vitesse de cisaillement de 200/seconde à 280°C dudit oligomère de polycarbonate bromé est de 60 à 600 Pa.s.

6. Feuille de transfert, selon l'une quelconque des revendications précédentes, dont l'épaisseur est de 135 à 200 µm.

7. Feuille de transfert, selon la revendication 6, dont l'épaisseur est de 140 à 170 µm.

8. Feuille de transfert, selon l'une quelconque des revendications précédentes, ayant pour caractéristiques que le nombre de fois où ladite feuille peut passer sous le rouleau sans de briser, selon le test de durabilité mécanique décrit dans la description, est d'au moins 4 x 10⁴, que l'ininflammabilité de la feuille est telle qu'elle répond aux exigences du niveau V-2 au moins selon les normes UL N° 94, et que la transmittance de la feuille aux rayons parallèles est d'au moins 60 %.

9. Utilisation d'une feuille de transfert, telle que décrite dans l'une quelconque des revendications précédentes, dans des machines à photocopier ou des imprimantes électrophotographiques.
